# DEMANDE DE BREVET EUROPEEN

(11) **EP 1 533 148 A1**
(43) Date de publication de la demande: **25.05.2005**
(21) Numéro de dépôt: 04292640.2
(22) Date de dépôt: 08.11.2004
(51) Int. Cl.: B60C 23/04

(54) **Système et procédé de determination d'au moins un paramètre d'au moins un organe tournant au moyen de signaux de réference et de vitesse**

(30) Priorité: 21.11.2003 FR 0350879
(71) Demandeur: SNR ROULEMENTS, F-74010 Annecy Cedex (FR)
(72) Inventeur: Nicot, Christophe, 74600 Quintal (FR); Duret, Christophe, 74600 Quintal (FR)
(74) Mandataire: Geismar, Thierry

(57) **Abrégé**

L'invention concerne un système de détermination d'au moins un paramètre d'au moins un organe tournant (1) par rapport à une structure fixe (2), comprenant, pour chaque organe tournant (1), un ensemble comprenant un transpondeur (3), un codeur (5) comprenant une singularité de référence, un capteur (6) apte à délivrer un signal comprenant une impulsion de référence correspondant à la détection de la singularité de référence, un dispositif de détection (4) du ou des paramètre(s) issu(s) du transpondeur (3) et un dispositif de mesure de la vitesse de rotation de l'organe tournant (1) ;
ledit système comprenant en outre un dispositif d'activation (7) qui est connecté à chaque capteur (6), à chaque dispositif de détection (4) et à chaque dispositif de mesure de la vitesse, ledit dispositif de d'activation étant apte, lors de l'enregistrement d'une impulsion de référence issue du capteur (6) d'un ensemble, à activer le dispositif de détection (4) de l'ensemble à un instant fonction de la position indexée du transpondeur (3) et de la vitesse mesurée, de sorte que le transpondeur (3) de l'ensemble soit dans le cône d'émission/réception du moyen de communication dudit dispositif de détection.

## Description

L'invention concerne un système de détermination d'au moins un paramètre d'au moins un organe tournant par rapport à une structure fixe, un procédé de détermination d'au moins un tel paramètre ainsi qu'un véhicule automobile comprenant un tel système.

L'invention s'applique typiquement à la détermination d'au moins un paramètre, tel que la pression, la température, la déformation, l'usure, d'un pneu de véhicule automobile.

Pour ce faire, il est connu d'utiliser pour chaque pneu :
- un transpondeur qui est solidaire en rotation du pneu, ledit transpondeur étant apte à mesurer le ou les paramètre(s) ; et
- un dispositif de détection du ou des paramètre(s) issu(s) du transpondeur, ledit dispositif étant solidaire du châssis du véhicule et comprenant une antenne apte à émettre un signal d'excitation au transpondeur et à recevoir la ou les mesure(s).

Pour permettre la communication entre le transpondeur et le dispositif de détection, l'antenne de ce dernier est positionnée à proximité de la zone de déplacement du transpondeur, typiquement dans le passage de roue.

Ainsi, en activant le dispositif de détection, il est possible d'obtenir périodiquement la valeur du ou des paramètre(s) mesuré(s) par le transpondeur et de rendre disponible cette valeur à un système, par exemple de sécurité du véhicule, qui la contrôle et/ou l'utilise.

Un problème qui se pose concerne l'établissement d'une procédure d'activation du dispositif de détection qui permette d'obtenir une communication satisfaisante entre ledit dispositif et le transpondeur. En effet, l'antenne présentant un cône d'émission/réception donné, l'activation doit être réalisée lorsque le transpondeur se trouve dans ce cône.

Selon une première solution, on a proposé d'activer le dispositif de détection en continu, mais celle-ci présente plusieurs inconvénients. Tout d'abord, elle induit une consommation électrique importante, et en partie inutile lorsque le transpondeur ne se trouve pas dans le cône d'émission/réception. En outre, elle sollicite le transpondeur à chaque rotation, ce qui, dans certaines conditions de roulage, est inutile et, dans le cas d'un transpondeur actif, consomme l'énergie de sa batterie inutilement.

Pour tenter de limiter la consommation électrique, on a proposé selon une deuxième solution d'activer à fréquence fixe le dispositif de détection. Mais cette solution présente également plusieurs inconvénients. Tout d'abord, elle ne permet pas d'assurer que le transpondeur soit dans le cône d'émission/réception lorsque le dispositif de détection est activé. En particulier, pour une fréquence d'activation donnée, il existe des vitesses de rotation du transpondeur pour lesquelles cette condition n'est pas remplie, ce qui est incompatible avec une utilisation du ou des paramètre(s) dans une fonction de sécurité du véhicule. En outre, cette solution ne permet pas de garantir une détermination du ou des paramètre(s) à fréquence donnée, par exemple en fonction de conditions de fonctionnement du véhicule.

Pour tenter de résoudre les inconvénients de cette deuxième solution, on a proposé d'augmenter la taille de l'antenne, de sorte à augmenter le cône d'émission/réception correspondant. Mais, outre que cette possibilité ne peut que limiter ces inconvénients sans les résoudre complètement puisque qu'une zone d'ombre dans la communication est toujours présente, l'augmentation de la taille de l'antenne induit des contraintes d'intégration accrues dans le passage de roue ainsi qu'une puissance et donc une consommation électrique plus importante.

Pour résoudre l'ensemble de ces inconvénients, l'invention propose notamment un système de détermination qui permette de synchroniser la communication entre l'antenne et le transpondeur lorsque celui-ci est dans le cône d'émission/réception, de sorte à sécuriser la communication en optimisant la consommation électrique, et ce tout en pouvant adapter la fréquence de communication à des conditions de fonctionnement du véhicule.

A cet effet, et selon un premier aspect, l'invention propose un système de détermination d'au moins un paramètre d'au moins un organe tournant par rapport à une structure fixe, ledit système comprenant, pour chaque organe tournant, un ensemble comprenant :
- un transpondeur solidaire en rotation de l'organe tournant, ledit transpondeur étant apte à mesurer le ou les paramètre(s) à déterminer ;
- un codeur solidaire en rotation de l'organe tournant, ledit codeur comprenant une singularité de référence dont la position angulaire est indexée par rapport à la position angulaire du transpondeur sur l'organe tournant ;
- un capteur solidaire de la structure fixe, ledit capteur étant disposé en regard et à distance de lecture du codeur, ledit capteur étant apte à délivrer un signal top tour comprenant une impulsion de référence correspondant à la détection de la singularité de référence ;
- un dispositif de détection du ou des paramètre(s) issu(s) du transpondeur, ledit dispositif étant solidaire de la structure fixe et comprenant un moyen de communication apte à émettre un signal d'excitation au transpondeur et à recevoir la ou les mesure(s) ;
- un dispositif de mesure de la vitesse de rotation de l'organe tournant ; ledit système comprenant en outre :
   un dispositif d'activation qui est connecté à chaque capteur, à chaque dispositif de détection et à chaque dispositif de mesure de la vitesse, ledit dispositif de d'activation étant apte, lors de l'enregistrement d'une impulsion de référence issue du capteur d'un ensemble, à activer le dispositif de détection de l'ensemble à un instant fonction de la position indexée du transpondeur et de la vitesse mesurée, de sorte que le transpondeur de l'ensemble soit dans le cône d'émission/réception du moyen de communication dudit dispositif de détection.

Selon un deuxième aspect, l'invention propose un procédé de détermination d'au moins un paramètre d'au moins un organe tournant par rapport à une structure fixe au moyen d'un tel système, dans lequel, lors de l'enregistrement d'une impulsion de référence, le dispositif d'activation détermine un délai d'activation en fonction de la vitesse mesurée et de la position indexée du transpondeur, ledit dispositif activant le dispositif de détection après écoulement de ce délai.

Selon un troisième aspect, l'invention propose un véhicule automobile comprenant un tel système, chaque ensemble étant disposé de sorte à déterminer au moins un paramètre d'un pneu dudit véhicule.

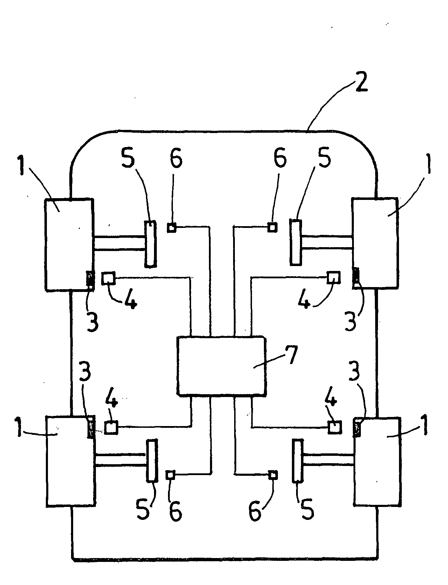

D'autres objets et avantages de l'invention apparaîtront au cours de la description qui suit, faite en référence au dessin annexé qui représente de façon schématique un véhicule comprenant un système de détermination selon l'invention.

L'invention concerne un système de détermination d'au moins un paramètre d'au moins un organe tournant 1 en rotation par rapport à une structure fixe 2. Selon le mode de réalisation décrit en relation avec la figure, ce système est destiné à la détermination d'au moins un paramètre d'au moins un pneu 1 d'un véhicule automobile. En particulier, le système permet la détermination de la pression, de la température, de la déformation et/ou de l'usure de tous les pneus 1 du véhicule.

Pour ce faire, le système comprend, pour chaque pneu 1, un ensemble comprenant un transpondeur 3 apte à mesurer le ou les paramètre(s) à déterminer, et un dispositif de détection 4 du ou des paramètre(s) issu(s) du transpondeur 3. Le transpondeur 3 est solidaire en rotation du pneu 1 et le dispositif de détection 4 est solidaire, au voisinage du transpondeur 3, du châssis 2 du véhicule. Selon d'autres applications, le transpondeur 3 peut être solidaire de la roue ou du roulement sur lequel la roue est montée.

Le système de détermination permet, en activant le dispositif de détection 4, d'obtenir périodiquement la valeur du ou des paramètre(s) mesuré(s) par le transpondeur 3 et de rendre disponible cette valeur à un système fixe par rapport au châssis 2, par exemple de sécurité du véhicule, qui la contrôle et/ou l'utilise. En particulier, la détermination automatique du ou des paramètre(s) peut permettre d'avertir le conducteur en cas d'anomalie. En outre, le ou les paramètre(s) peuvent être utilisés dans des systèmes d'aide à la conduite tels que l'anti-blocage des roues (ABS), le contrôle de la trajectoire (ESP) ou l'assistance électrique de la direction (DAE), de sorte à adapter l'action de ces systèmes en fonction de la valeur des paramètres déterminés.

Un ensemble transpondeur 3 - dispositif de détection 4 est connu de l'art antérieur :
- le dispositif de détection 4 comprenant un moyen de communication, par exemple sous la forme d'une antenne directionnelle, apte à émettre un signal d'excitation, par exemple RF, au transpondeur 3 et à recevoir la ou les mesure(s) ; et
- le transpondeur 3 pouvant être de type actif ou de type passif suivant qu'il est alimenté par une batterie propre afin d'effectuer la mesure et la communication ou que ces fonctions sont induites par le signal d'excitation issu du dispositif de détection 4. Pour la détermination de la pression du pneu 1, le transpondeur 3 peut être du type à ondes acoustiques de surface (SAW).

Dans le véhicule suivant l'invention, l'antenne est logée dans le passage de la roue sur laquelle est monté le pneu 1 et le transpondeur 3 est logé dans la valve du pneu 1. Ainsi la distance antenne - transpondeur 3 est réduite, ce qui permet d'optimiser la puissance électrique nécessaire à la communication des mesures entre le pneu 1 et le châssis 2. En variante, on peut également prévoir que le transpondeur 3 soit disposé dans la bande de roulement du pneu 1, notamment pour mesurer la déformation et l'usure de celui-ci.

L'ensemble comprend en outre un codeur 5 solidaire en rotation du pneu 1 et un capteur 6 solidaire du châssis 2 du véhicule. En particulier, le codeur 5 et/ou le capteur 6 peuvent être disposés au niveau du roulement de la roue tel que cela est par exemple décrit dans le document FR-2 700 588 issu de la demanderesse. Le codeur 5 peut en particulier être solidarisé en rotation à la bague tournante du roulement et le capteur 6 peut être associé à la bague fixe ou dissocié de celle-ci, pour être en regard et à distance de lecture du codeur 5.

Le codeur 5 a pour fonction de délivrer une information de position angulaire de référence. A cet effet, le codeur 5 comprend une singularité de référence qui, comme on le verra dans la suite de la description, est indexée par rapport à la position angulaire du transpondeur 3 sur le pneu 1.

L'ensemble comprend également un dispositif de mesure de la vitesse de rotation du pneu 1. On décrit ci-dessous un mode de réalisation dans lequel le dispositif de mesure de la vitesse est intégré au capteur 6. Toutefois, d'autres réalisations comprenant un dispositif de mesure de la vitesse séparé sont également envisageables.

Suivant la réalisation, le codeur 5 est formé d'un anneau magnétique comprenant sur sa surface une piste principale et une piste top tour qui sont concentriques, lesdites pistes comprenant une succession de pôles Nord et Sud, la singularité de référence étant réalisée par une transition magnétique qui est différente des autres.

En regard et à distance de lecture de ce codeur 5, est prévu le capteur 6 qui comprend un circuit électronique qui forme également dispositif de mesure de la vitesse de rotation du pneu 1. A cet effet, le circuit électronique est apte à délivrer un signal représentatif de la vitesse de rotation du codeur 5, et donc celle du pneu 1 puisque le codeur est solidaire en rotation de celui-ci, par rapport au châssis 2 et un signal top tour comprenant une impulsion de référence correspondant à la détection de la singularité de référence.

Suivant une réalisation, le capteur 6 comprend au moins trois éléments sensibles dont au moins deux sont positionnés en regard de la piste principale et au moins un est positionné en regard de la piste top tour.

Dans un exemple particulier, les éléments sensibles sont choisis dans le groupe comprenant les sondes à effet Hall, les magnétorésistances, les magnétorésistances géantes.

Le capteur 6 utilisé dans cette réalisation est apte à délivrer deux signaux électriques S1, S2 périodiques en quadrature par l'intermédiaire des éléments sensibles disposés en regard de la piste principale et un signal électrique S3 par l'intermédiaire des éléments sensibles disposés en regard de la piste top tour.

Le principe d'obtention des signaux S1 et S2 à partir d'une pluralité d'éléments sensibles alignés est par exemple décrit dans le document FR-2 792 403 issu de la demanderesse.

Mais des capteurs comprenant deux éléments sensibles qui sont aptes à délivrer les signaux S1 et S2 sont également connus.

A partir des signaux S1, S2 et S3, le circuit électronique est apte à délivrer des signaux digitaux A, B carrés en quadrature et un signal top tour C. Les signaux A, B étant représentatifs de la vitesse de rotation du codeur mais également de sa position angulaire ainsi que de son sens de rotation.

Un principe d'obtention des signaux digitaux A, B et C, ainsi que différents modes de réalisation des singularités magnétiques, sont décrits dans les documents FR-2 769 088 et EP-0 871 014.

Suivant une réalisation, le circuit électronique comprend en outre un interpolateur, par exemple du type décrit dans le document FR-2 754 063 issu de la demanderesse, permettant d'augmenter la résolution des signaux de sortie.

Le capteur 6 peut être intégré sur un substrat en silicium ou équivalent par exemple AsGa, de sorte à former un circuit intégré et personnalisé pour une application spécifique, circuit parfois désigné sous le terme ASIC pour faire référence au circuit intégré conçu partiellement ou complètement en fonction des besoins.

Bien que la description soit faite en relation avec un ensemble codeur/capteur magnétique, il est également possible de mettre en oeuvre l'invention de façon analogue en utilisant une technologie de type optique. Par exemple, le codeur 5 peut être formé d'une cible en métal ou en verre sur laquelle les pistes principale et top tour ont été gravées de sorte à former un motif optique analogue au motif magnétique multipolaire exposé ci-dessus, les éléments sensibles étant alors formés de détecteurs optiques.

Outre le ou les ensemble(s), le système comprend un dispositif d'activation 7, sous la forme d'une unité de calcul, qui est connecté à chaque capteur 6, à chaque dispositif de détection 4 et à chaque dispositif de mesure de la vitesse, de sorte à pouvoir synchroniser temporellement le passage du transpondeur 3 dans le cône d'émission/réception de l'antenne dudit dispositif de détection pour recueillir la valeur du ou des paramètre(s) détecté(s). Suivant l'invention, le dispositif d'activation 7 est apte, lors de l'enregistrement d'une impulsion de référence issue du capteur 6 d'un ensemble, à activer le dispositif de détection 4 de l'ensemble à un instant fonction de la position indexée du transpondeur 3 et de la vitesse mesurée, de sorte que le transpondeur 3 de l'ensemble soit dans le cône d'émission/réception de l'antenne dudit dispositif de détection.

En effet, la position de la singularité étant indexée par rapport à celle du transpondeur 3, il existe, entre l'impulsion de référence et la position du transpondeur 3, un décalage temporel fonction de la vitesse. La plage angulaire du cône d'émission/réception de l'antenne étant connue, ce décalage est utilisé par le dispositif d'activation 7 pour déterminer un délai d'activation dans lequel le transpondeur 3 est dans ledit cône. En particulier, le système selon l'invention permet, grâce à la synchronisation, d'optimiser la durée de vie de la batterie alimentant le dispositif d'activation 7 et, le cas échéant, de la batterie alimentant le transpondeur 3 dans le cas où celui-ci est actif.

Selon une réalisation, chaque codeur 5 comprend des moyens de codage de l'impulsion qui sont différents d'un codeur 5 à l'autre, le dispositif d'activation 7 comprenant des moyens d'identification du codage de sorte à activer le dispositif de détection 4 de l'ensemble du codeur 5 dont est issue l'impulsion. Cette réalisation peut permettre de simplifier le câblage entre les ensembles et le dispositif d'activation 7, puisque la reconnaissance du pneu 1 concerné ne dépend plus de l'adressage physique des signaux de position au dispositif d'activation 7. En particulier, suivant cette réalisation, on peut prévoir une liaison multiplexée ou sans fil entre les ensembles et le dispositif d'activation 7. Par ailleurs, cette réalisation permet d'identifier électroniquement la roue dont sont issus le ou les paramètre(s).

Dans un exemple de réalisation, les moyens de codage comprennent un nombre de singularités supplémentaires qui sont réparties sur la codeur 5.

Dans un procédé de détermination utilisant un système suivant l'invention, lors de l'enregistrement d'une impulsion de référence, le dispositif d'activation 7 détermine un délai d'activation en fonction de la vitesse mesurée et de la position indexée du transpondeur 3, le dispositif d'activation 7 activant le dispositif de détection 4 après écoulement de ce délai.

Selon une réalisation, le procédé prévoit une procédure de recalcul du délai en fonction des variations de vitesse intervenant avant l'activation. Cette procédure permet, en cas d'accélération et/ de décélération du véhicule entre la détermination du délai et l'activation, de tenir compte du changement de vitesse pour synchroniser le passage du transpondeur 3 dans le cône d'émission/réception.

Selon une réalisation, il peut être prévu de réaliser l'activation à des périodes d'interrogation variables qui sont déterminées en fonction des conditions de fonctionnement du pneu 1. En particulier, ces conditions peuvent être fonction du ou des paramètre(s) mesuré(s) (pression, température), des conditions de roulage du véhicule telles que la vitesse ou l'état de la chaussée (condition de pluie ou de neige par exemple), du positionnement du pneu 1 (avant ou arrière). Pour ce faire, le dispositif d'activation 7 est également alimenté avec les paramètres pertinents et avec les conditions souhaitées de sorte à calculer le délai d'activation en fonction desdites conditions de fonctionnement.

Dans un exemple de réalisation, on peut définir au moins un seuil de vitesse pour le véhicule de sorte que :
- en dessous du seuil, le délai d'activation est déterminé de sorte à réaliser l'activation à une fréquence fᵢ ;
- au dessus du seuil, le délai d'activation est déterminé de sorte à réaliser l'activation à une fréquence multiple de fᵢ.

On peut également décider de déterminer la pression des pneus 1 arrières plus fréquemment que celle des pneus avants.

On décrit ci-dessous, des réalisations possibles de l'indexation du transpondeur 3 par rapport à la singularité de référence.

Selon une première réalisation, la position indexée du transpondeur 3 par rapport à la singularité de référence est préalablement mémorisée dans le dispositif d'activation 7. Par exemple cette indexation est réalisée mécaniquement en usine ou dans un atelier, sur un banc apte à mesurer le décalage angulaire entre la singularité de référence et le transpondeur 3.

Selon une variante de cette réalisation, la singularité de référence est indexée par rapport à toutes les positions angulaires possibles du transpondeur 3 sur le pneu 1, ces positions correspondant chacune à une position de montage possible de la roue sur le véhicule.

Dans cette réalisation, le dispositif d'activation 7 est apte à activer le dispositif de détection 4 lorsque chaque position angulaire possible du transpondeur 3 est dans le cône d'émission/réception de l'antenne. Ainsi, par exemple pour quatre positions possibles, le dispositif de détection 4 sera activé quatre fois, la communication étant réalisée de façon satisfaisante uniquement dans l'une de ces positions.

Cette réalisation permet, en cas de montage/démontage de la roue, de ne pas avoir à refaire l'indexation.

Selon une deuxième réalisation, le procédé de détermination comprend une procédure préalable d'indexation de la position de la singularité de référence par rapport à la position angulaire du transpondeur 3.

Cette procédure peut être réalisée par activation à fréquence fixe, par exemple toutes les secondes, du dispositif de détection 4 et, lorsque le signal mesuré par le dispositif de détection 4 est satisfaisant, détermination et enregistrement dans le dispositif d'activation 7 de la position indexée lors de la détection de l'impulsion de référence suivante.

En particulier, cette procédure peut être déclenchée à chaque mise en service du système de détermination, avant la détermination du ou des paramètre(s) suivant l'invention.

Suivant une réalisation, on peut prévoir une procédure itérative d'optimisation de la position indexée, ladite procédure pouvant être déclenchée en continu ou de façon périodique.

La procédure d'optimisation peut prévoir d'analyser la qualité du signal issu du dispositif de détection 4, par exemple son rapport signal sur bruit, le taux d'erreur de communication, la puissance communiquée. Si cette qualité est inférieure à un premier seuil, incrémenter et/ou décrémenter d'un pas donné, par exemple d'un degré, la position indexée. De façon itérative, la procédure permet, en analysant la qualité du signal correspondant, d'incrémenter ou de décrémenter la position indexée pour obtenir une position indexée optimisée dans laquelle la qualité du signal est maximale. Cette position optimisée est utilisée ultérieurement en tant que nouvelle position indexée dans le dispositif d'activation 7.

Suivant une réalisation du procédé, un deuxième seuil de qualité du signal, inférieur au premier, est utilisé dans le dispositif d'activation 7. On peut ainsi prévoir, si la qualité du signal est inférieure au deuxième seuil, de déclencher la procédure d'indexation à la place de la procédure d'optimisation. En particulier, cette réalisation permet, si la procédure d'optimisation ne permet pas de converger vers une position optimisée, de lancer une procédure d'indexation en cours d'optimisation.

## Revendications

1. Système de détermination d'au moins un paramètre d'au moins un organe tournant (1) par rapport à une structure fixe (2), ledit système comprenant, pour chaque organe tournant (1), un ensemble comprenant :
- un transpondeur (3) solidaire en rotation de l'organe tournant (1), ledit transpondeur étant apte à mesurer le ou les paramètre(s) à déterminer ;
- un codeur (5) solidaire en rotation de l'organe tournant (1), ledit codeur comprenant une singularité de référence dont la position angulaire est indexée par rapport à la position angulaire du transpondeur (3) sur l'organe tournant (1) ;
- un capteur (6) solidaire de la structure fixe (2), ledit capteur étant disposé en regard et à distance de lecture du codeur (5), ledit capteur étant apte à délivrer un signal top tour comprenant une impulsion de référence correspondant à la détection de la singularité de référence ;
- un dispositif de détection (4) du ou des paramètre(s) issu(s) du transpondeur (3), ledit dispositif étant solidaire de la structure fixe (2) et comprenant un moyen de communication apte à émettre un signal d'excitation au transpondeur (3) et à recevoir la ou les mesure(s) ;
- un dispositif de mesure de la vitesse de rotation de l'organe tournant (1) ;
ledit système comprenant en outre :
- un dispositif d'activation (7) qui est connecté à chaque capteur (6), à chaque dispositif de détection (4) et à chaque dispositif de mesure de la vitesse, ledit dispositif de d'activation étant apte, lors de l'enregistrement d'une impulsion de référence issue du capteur (6) d'un ensemble, à activer le dispositif de détection (4) de l'ensemble à un instant fonction de la position indexée du transpondeur (3) et de la vitesse mesurée, de sorte que le transpondeur (3) de l'ensemble soit dans le cône d'émission/réception du moyen de communication dudit dispositif de détection.

2. Système selon la revendication 1, **caractérisé en ce que** le codeur (5) comprend une piste multipolaire principale et une piste multipolaire top tour qui sont concentriques, ladite piste top tour comprenant la singularité de référence, le capteur (6) comprenant un circuit électronique délivrant le signal top tour et formant dispositif de mesure de la vitesse de rotation.

3. Système selon la revendication 2, **caractérisé en ce que** le codeur (5) est formé d'un anneau magnétique comprenant sur sa surface la piste principale et la piste top tour qui sont concentriques, lesdites pistes comprenant une succession de pôles Nord et Sud, la singularité de référence étant réalisée par une transition magnétique qui est différente des autres.

4. Système selon l'une quelconque des revendications 1 à 3, **caractérisé en ce que** la singularité de référence est indexée par rapport à toutes les positions angulaire possibles du transpondeur (3) sur l'organe tournant (1), le dispositif d'activation (7) étant apte, lors de l'enregistrement de l'impulsion de référence, à activer le dispositif de détection (4) lorsque chaque position angulaire possible du transpondeur est dans le cône d'émission/réception du moyen de communication.

5. Système selon l'une quelconque des revendications 1 à 4, **caractérisé en ce que** chaque codeur (5) comprend en outre des moyens de codage de l'impulsion qui sont différents d'un codeur (5) à l'autre, le dispositif d'activation (7) comprenant des moyens d'identification du codage de sorte à activer le dispositif de détection (4) correspondant à l'ensemble du codeur (5) dont est issue l'impulsion.

6. Système selon la revendication 5, **caractérisé en ce que** les moyens de codage comprennent un nombre de singularités supplémentaires qui sont réparties sur le codeur.

7. Procédé de détermination d'au moins un paramètre d'au moins un organe tournant (1) par rapport à une structure fixe (2) au moyen d'un système selon l'une quelconque des revendications 1 à 3, dans lequel, lors de l'enregistrement d'une impulsion de référence, le dispositif d'activation (7) détermine un délai d'activation en fonction de la vitesse mesurée et de la position indexée du transpondeur (3), ledit dispositif activant le dispositif de détection (4) après écoulement de ce délai.

8. Procédé selon la revendication 7, **caractérisé en ce qu'**il comprend une procédure de recalcul du délai en fonction des variations de vitesse intervenant avant l'activation.

9. Procédé selon la revendication 7 ou 8, **caractérisé en ce que** la position indexée du transpondeur (3) par rapport à la singularité de référence est préalablement mémorisée dans le dispositif d'activation (7).

10. Procédé selon la revendication 7 ou 8, **caractérisé en ce qu'**il comprend une procédure préalable d'indexation de la position de la singularité de référence par rapport à la position angulaire du transpondeur (3) sur l'organe tournant (1).

11. Procédé selon la revendication 10, **caractérisé en ce que** la procédure d'indexation est réalisée par activation à fréquence fixe du dispositif de détection (4), et, lorsque le signal mesuré par ledit dispositif est satisfaisant, détermination de la position indexée lors de la détection de l'impulsion de référence suivante.

12. Procédé selon l'une quelconque des revendications 7 à 11, **caractérisé en ce qu'**il comprend une procédure itérative d'optimisation de la position indexée dans laquelle la qualité du signal issu du dispositif de détection (4) est analysée, et, si la qualité est inférieure à un seuil, la position indexée est incrémentée et/ou décrémentée d'un pas donné pour déterminer une nouvelle position indexée optimisée qui est utilisée ultérieurement par le dispositif d'activation(7).

13. Procédé selon la revendication 12 lorsqu'elle dépend de la revendication 10, dans lequel, si la qualité du signal est inférieure à un deuxième seuil qui est inférieur au premier seuil, la procédure d'indexation est réalisée à la place de la procédure d'optimisation.

14. Procédé selon l'une quelconque des revendications 7 à 13, **caractérisé en ce que** le délai d'activation est en outre fonction de conditions de fonctionnement de l'organe tournant (1).

15. Véhicule automobile comprenant un système selon l'une quelconque des revendications 1 à 6, chaque ensemble étant disposé de sorte à déterminer au moins un paramètre d'un pneu (1) dudit véhicule.

16. Véhicule selon la revendication 15, **caractérisé en ce que** le moyen de communication est logé dans le passage de la roue sur laquelle est monté le pneu (1) et **en ce que** le transpondeur (3) est logé dans la valve du pneu (1).
